# EUROPÄISCHE PATENTANMELDUNG

(11) **EP 1 666 529 A1**
(43) Veröffentlichungstag der Anmeldung: **07.06.2006**
(21) Anmeldenummer: 05025392.1
(22) Anmeldetag: 22.11.2005
(51) Int. Cl.: C08L 23/08, C08L 13/00

(54) **Mischungen aus Ethylen-Vinylalkohol-Copolymerisaten und vernetzbaren Kautschuken mit reaktiven Gruppierungen sowie deren Verwendung zur Herstellung von geformten Artikeln mit guten Barriere-Eigenschaften**

(30) Priorität: 02.12.2004 DE 102004058063
(71) Anmelder: LANXESS Deutschland GmbH, 51369 Leverkusen (DE)
(72) Erfinder: Hoch, Martin, Dr., 52525 Heinsberg (DE); Parg, Roland, Dr., 51373 Leverkusen (DE); Krista, Rayner, Strathroy, ON N7G Ontario 3X1 Canada (CA); Chu, Chia, Dr., Coraopolis, PA 15108 (US)

(57) **Zusammenfassung**

Die Erfindung betrifft Mischungen aus Ethylen-Vinylalkohol-Copolymeren und vemetzbaren Kautschuken mit reaktiven Gruppierungen sowie deren Verwendung zur Herstellung von geformten Artikeln mit guten Barriere-Eigenschaften. Die erfindungsgemäßen Mischungen zeichnen sich insbesondere durch die gute Barriere-Eigenschaften sowie durch eine hohe Schlagzähigkeit besonders bei tiefen Temperaturen aus, wodurch sich ein breites Anwendungsspektrum dieser Mischungen ergibt.

## Beschreibung

Die Erfindung betrifft Mischungen aus Ethylen-Vinylalkohol-Copolymeren und vernetzbaren Kautschuken mit reaktiven Gruppierungen sowie deren Verwendung zur Herstellung von geformten Artikeln mit guten Barriere-Eigenschaften.

Der Einsatz von Ethylen-Vinylalkohol-Copolymerisaten, kurz EVOH genannt, in Materialien mit hohen Barriere-Eigenschaften ist bekannt. Die Barriere-Eigenschaften der Ethylen-Vinylalkohol-Copolymerisate enthaltenden Materialien beruhen darauf, dass diese Materialien die Permeation von Gasen, organischen Flüssigkeiten und anderen niedermolekularen Chemikalien behindern. Ein weiterer Vorteil der Ethylen-Vinylalkohol-Copolymerisate enthaltenen Barriere-Materialien besteht darin, dass diese Materialien bei thermischer Belastung oder Verbrennung keine korrosiven Gase entwickeln, wie dies der Fall sein kann bei Barriere-Materialien, die auf Polyvinylidenhalogeniden oder Polyvinylhalogeniden beruhen.

Entsprechend der hervorragenden Barriere-Eigenschaften von EVOH können diese auch eingesetzt werden in beispielsweise Kunststoffkraftstofftanks von Automobilen und Behältern für empfindliche Substanzen bzw. Wirkstoffe, die während ihrer Lagerung nicht in die Umgebung entweichen sollen, beispielsweise bei der Lagerung von Pestiziden in entsprechenden Flaschen, Behältern oder Lagertanks.

Nachteilig beim Einsatz von EVOH als Barriere-Materialien ist deren Sprödigkeit. Es liegt daher nahe, dass der Einsatzbereich von Ethylen-Vinylalkohol-Copolymerisaten als Barriere-Materialien wesentlich erweitert werden könnte, wenn deren Schlagzähigkeit insbesondere bei tieferen Temperaturen beträchtlich verbessert werden könnte, was mit einer Verminderung der Spröde einherginge. Insbesondere bei Automobilanwendungen werden zunehmend höchste Ansprüche an die Kraftstoffdichtigkeit gefordert, so dass möglichst alle Kraftstoff-berührenden Teile eine hohe Barrierewirkung aufweisen müssen. Andererseits sollen viele Bauteile aus Gründen der Schwingungsentkopplung möglichst nicht starr, sondern flexibel miteinander verbunden werden, bzw. sollen selbst eine gewisse Flexibilität aufweisen. Diese soll auch unter extremen Temperaturbedingungen bzw. raschen Stoßbeanspruchungen erhalten bleiben.

Die aus der Praxis bekannten Abmischungen von EVOH mit anderen Thermoplasten, beispielsweise mit High-density-polyethylen (HDPE) oder Low-density-polyethylen (LDPE) führten nicht dazu, dass die Schlagzähigkeit bei tiefen Temperaturen wesentlich verbessert werden konnte unter Beibehaltung der exzellenten Barriere-Eigenschaften von EVOH.

Es bestand daher die Aufgabe, Ethylen-Vinylalkohol-Copolymerisat-Mischungen zu Verfügung zu stellen, die eine gute Schlagzähigkeit und Flexibilität bei tiefen Temperaturen aufweisen unter Beibehaltung der exzellenten Barriere-Eigenschaften.

Es wurde nun gefunden, dass Mischungen bestehend aus Ethylen-Vinylalkohol-Copolymerisaten und vernetzbaren Kautschuken mit bestimmten reaktiven Gruppierungen als Materialien geeignet sind, die oben erwähnten physikalischen Eigenschaften zu erfüllen und sich deshalb für den Einsatz als entsprechende flexible Barriere-Materialien eignen.

Gegenstand der vorliegenden Erfindung sind daher Mischungen bestehend aus
a) Ethylen-Vinylakohol-Copolymerisaten mit einem Gehalt an Ethylengruppen von 15 bis 60 Mol-%, einem Gehalt an Vinylalkoholgruppen von 40 bis 85 Mol-% und gegebenenfalls einem Gehalt an Vinylestergruppen von maximal 20 Mol-% sowie
b) vernetzbaren Kautschuken mit einem T_{G}-Wert von ≤ -20°C, wobei die Kautschuke mit reaktiven Gruppen modifiziert sind und der Gehalt an modifizierenden Gruppen 0,01 bis 5 Mol-% beträgt,
   wobei die Menge an Komponente a) 30 bis 95 Gew.-%, bezogen auf die Menge der Gesamtmischung, ausmacht.

Besonders bevorzugt sind Mischungen bestehend aus 50 bis 95 Gew.-%, ganz besonders bevorzugt bis 80% Gew.-% an Komponente a), bezogen auf die Menge der Gesamtmischung.

Als Komponente a) [Ethylen-Vinylalkohol-Copolymerisate] werden besonders Polymerisate eingesetzt, deren Gehalt an Ethylengruppen 25 bis 50 Mol-% und deren Gehalt an Vinylalkoholgruppen bis 75 Mol-% beträgt. Der Gehalt an Vinylestergruppen sollte bevorzugt im Bereich von 0 bis 20 Mol-% liegen, insbesondere im Bereich von 0 bis 5 Mol-%.

Der Restgehalt an Vinylestergruppen der Ethylen-Vinylalkohol-Copolymerisate beruht in der Praxis darauf, dass die Ethylenvinylalkohole üblicherweise hergestellt werden durch die Verseifung von Ethylen-Vinylacetat-Copolymeren. Bei nicht vollständiger Verseifung verbleibt ein entsprechender Rest an Vinylestergruppen im Copolymerisat.

Als Komponente b) [vernetzbarer Kautschuke] eignen sich solche Kautschuke, die einen T_{G}-Wert von insbesondere ≤ - 25°C, ganz besonders bevorzugt ≤ -35°C besitzen.

Als Beispiele für solche Kautschuke werden genannt: Ethylen-α-Olefincopolymerisate mit einem Gehalt an Ethylen von etwa 30 bis 80 Gew.-%, bevorzugt 40 bis 75 Gew.-%, und Propylen, Butylen, Hexen und Octen als α-Olefin, bevorzugt sind Ethylen-α-Olefincopolymere, ganz besonders bevorzugt sind Copolymere auf Basis von Ethylen und Propylen. Diese Copolymere können noch Dienkomponenten bis 15 Gew.% enthalten, die aus z.B. Ethylidennorbornen, Dicyclopentadien oder Hexadien bestehen.

Darüber hinaus ist es für die einzusetzenden vernetzbaren Kautschuke von Bedeutung, dass sie reaktive Gruppen besitzen, deren Gehalt bevorzugt im Bereich von 0,02 bis 4, insbesondere 0,02 bis 3 Mol-% beträgt. Es ist auch möglich, Mischungen aus Kautschuken einzusetzen, wobei nur eine Kautschuk-Komponente reaktive Gruppen enthält und dadurch für eine wirkungsvolle Anbindung der Phasen sorgt. Beispielsweise koennen Mischungen aus Ethylen-Propylen-Elastomer mit reaktiver Gruppen und solchen ohne reaktive Gruppe verwendet werden.

Als reaktive, funktionelle Gruppen kommen solche in Betracht, die mit den Alkoholgruppen der Komponente a) in Reaktion treten können. Geeignet sind beispielsweise Carboxylgruppen, Säureanhydridgruppen, Sulfonylchloridgruppen, Carbonsäurechloridgruppen, Isocyanatgruppen und Epoxygruppen. Bevorzugt sind Säureanhydridgruppen.

Es ist möglich, die reaktiven Gruppierungen in die Kautschuke durch Copolymerisation mit entsprechenden Monomeren einzubauen oder durch entsprechende Reaktionen am Kautschuk, beispielsweise durch Pfropfreaktion. So ist es beispielsweise möglich, durch eine entsprechende Pfropfreaktion von Maleinsäureanhydrid mit einem Ethylen-α-Olefinkautschuk in Lösung oder in der Schmelze durch entsprechenden Mischungsprozesse in Gegenwart von radikal bildenden Initiatoren, wie Peroxiden, die bevorzugt eingesetzten Ethylen-α-Olefinkautschuke in entsprechender modifizierter Form herzustellen.

Wie erwähnt, werden bevorzugt solche vernetzbaren Kautschuke als Komponente b) für die erfindungsgemäßen Mischungen eingesetzt, die als reaktive Gruppen Maleinsäureanhydridgruppen mit einem Gehalt von 0,2 bis 3 mol% aufweisen und basieren auf Ethylen-Propylen-Copolymerisaten mit einem Gehalt an Ethylen von 45 bis 75 Gew.-%.

Selbstverständlich ist es möglich, die erfindungsgemäßen Mischungen noch mit weiteren Komponenten, wie PE, insbesondere HDPE, mit Polyamiden und Copolyamiden, abzumischen, wobei die Auswahl der Komponenten und deren Menge sich nach der späteren Verwendung der erfindungsgemäßen Mischungen richtet und als begrenzender Mengenfaktor die Homogenität der erfindungsgemäßen Mischungen zu betrachten ist. Es dabei zu beachten, dass sichergestellt werden muß, dass der Thermoplast der Komponente a) die kontinuierliche Phase darstellt oder zumindest im Blend eine lamellare Struktur besitzt und dadurch eine wirkungsvolle Permeationsbarriere gewährleistet ist.

Die erfindungsgemäßen Mischungen besitzen Tg-Werte der Kautschukphase (gemessen durch DSC) im Bereich von -20°C und niedriger, bevorzugt nicht höher als -30°C.

Ein weiterer Gegenstand der vorliegenden Erfindung ist die Verwendung der erfindungsgemäßen Mischungen zur Herstellung von geformten Artikel, die hervorragende Barriere-Eigenschaften aufweisen, verbunden mit guten Schlagzähigkeiten und einer hervorragende Flexibilität bei tiefen Temperaturen. Als entsprechende geformte Artikel sind beispielsweise zu erwähnen:
Leitungen, Verbindungsstücke, Adapter oder Kraftstofftanks, um zu verhindern, dass Kraftstoff, Schmieröle, Kühlmedien und andere Flüssigkeiten sowie Gase, wie z.B. Wasserstoff, nach außen migrieren. Weiterhin können dadurch Thermoplastwerkstoffe gegen Stress-Crack-Versagen infolge des Kontakts mit organischen Flüssigkeiten geschützt werden.

Die erfindungsgemäßen Werkstoffe sind daher einsetzbar im Bereich von Automobilteilen, wo sowohl eine hohe Medienbeständigkeit und Permeationssperre wie auch eine hohe Flexibilität gewünscht werden. Weiter sind zu nennen Leitungen und Dichtungen in Kuehlagregaten sowohl im Automobilbereich wie auch beispielsweise in der Gebauedekuehlung. Auch in der Brennstoffzellentechnologie werden derartige flexible Barrierwerkstoffe sehr gewuenscht. Da diese Blends auch mit geeigneten Kautschukvulkanisaten zur Haftung gebracht werden können, sind dadurch auch Kombinationen von Kautschuk und Kunststoffteilen möglich. Es kann hier naemlich auch gezeigt werden, wie derartige Kautschukvulkanisate aufgebaut werden muessen, um besonders hohe Haftungen zu erzielen.

Die Verarbeitung ist möglich mit den in der Thermoplastindustrie üblichen Verfahren wie (Co)Extrusion, Spritzgiessen, Extrusionblasformen und Pressenvulkanisation mit entsprechenden Kautschukcompounds. Besonders typisch ist die Verarbeitung zusammen mit anderen Thermoplasten, wie HDPE, PA, PBT, Polycarbonat und weiteren sogenannten Engineering Plastics. Im Einzelfall ist dabei zu entscheiden, ob noch Tielayermaterialien zur besseren Haftung zu den anderen Thermoplastwerkstoffen eingesetzt werden müssen. Es auch möglich, die erfindungsgemäßen Blends zusammen mit thermoplastischen Vulkanisaten zu verarbeiten, um damit insgesamt hoch-flexible Bauteile mit hoher Barriere mittels Thermoplastverarbeitungsmethoden zu fertigen.

### Beispiele

### Verwendete Materialien:

EVOH: Eval® L101 B, Ethylen-Vinylalkohol-Copolymer mit 27mol-% Ethylen und einem MFI-Wert von 4 g/10 min bei 190°C und 2,160 kg Last, hergestellt durch Fa. Eval Europe.

### MAH-g-EP(D)M:

Versuchsprodukt KA 8962, ein amorphes Ethylen-Propylen-Copolymer mit einem Ethylen-Gehalt von 48 Gew.-% und einem Gehalt an aufgepfropftem Maleinsäureanhydrid von 2 Gew.-%, einem MFI-Wert von 26 bei 190°C / 5,2 kg Last und einer Tg von -58°C (DSC), hergestellt durch Fa. Lanxess Corp.

Versuchsprodukt KA 8944, ein kristallines Ethylen-Propylen-Copolymer mit einem Ethylen-Gehalt von 68 Gew.-% und einem Gehalt an aufgepfropftem Maleinsäureanhydrid von 0,8 %, einem Mooney-Wert ML 1+8 bei 125°C von 62 Mooney-Einheiten, einem MFI-Wert von 16 bei 230°C / 21,6 kg Last und einer Tg von -47°C (DSC), hergestellt durch Lanxess Corp.

Exxelor® 1803: ein amorphes Ethylen-Propylen-Copolymer mit einem Ethylen-Gehalt von 48 % und einem Gehalt an aufgepfropftem Maleinsäureanhydrid von 0,5 %, einem MFI-Wert von 3 bei 230°C / 10 kg load, einer Tg -45°C (DSC), hergestellt durch Fa. ExxonMobil Chemicals

Grilon® BFZ 3: ein elastomer-modifiziertes Polyamid von Fa. Ems-Chemie, empfohlen für den Einsatz in Agro-Chemicalienbehältern.

### Versuche

### Materialprüfungen:

Kerbschlagzähigkeit (nach Charpy, ISO 179-1e), gekerbte 80x10x4 mm³-Flachstäbe im Anlieferungszustand bei verschiedenen Temperaturen an einer registrierenden Fallapparatur mit 40 mm Auflagenabstand, Fallhöhe 50 cm, Finpeendurchmesser 4 mm.

### Durchstoßfestigkeit:

Messungen an Rechteckprobenkörper mit 60x60 mm nach ISO 6603-2

Zugversuch: bei Raumtemperatur mit einer Zwick-Roell-Prüfmaschine an S2-Stäben, Querhauptgeschwindigkeit 5 mm/min, Registrierung der Dehnung mittels Videoextensometers

### Versuche 1 bis 4

Die Mischungen wurden in einem Mini-Kneter der Fa. DSM (Xplore Micro-compounder Midi 2000, 18 ml Innenvolumen, 2 gleichsinnig laufende Schnecken) bei 100 U/min hergestellt.

Dabei wurden 75 Teile EVOH L101B geblendet mit 25 Teilen maleinisiertem EPM sowie 0,3 Teile Irgafos® 168 als Stabilisator. Die Mischtemperatur war 250°C.

Die erhaltenen Schmelzen wurden direkt in angeschlossene Formen gespritzt, um Probekörper zu erhalten. Die Phasenstruktur wurde durch Messung der Schubmodulverläufe zwischen -150 und 250°C bei einer Frequenz von 1 Hz ermittelt.

| **Versuchs Nr.** | | **KA 8962** | **Exxelor 1803** | **KA 8944** | **Kein Modifikator** |
|---|---|---|---|---|---|
| | | **1** | **2** | **3** | **Vergleich 1** |
| **Phasenstruktur** | | | | | |
| Tg- Weichphase | [°C] | -62 | -58 | -56 | - |
| Tg - EVOH | [°C] | 66 | 63 | 62 | 66 |
| Tm - EVOH | [°C] | (132) / 187 | (136) / 188 | (128) / 186 | (126) / 188 |
| G'korr, EVOH (RT)¹ | [MPa] | 1230 | 1120 | 1265 | 1665 |

| | | | | | |
|---|---|---|---|---|---|
| ¹ G'korr, EVOH (RT): = G'probe(RT) / G'probe (-125°C) * G'EVOH (-125°C) | | | | | |

**Kerbschlagversuch 80 x 10 x 4 mm³-Probenkörper**

| | | | | | |
|---|---|---|---|---|---|
| Ak (RT) | [kJ/m²] | 66.0 ± 2.1 | 9.7 ± 2.5 | 49.0 | 5.2 ± 0.1 |
| Fmax (RT) | [N] | 465 ± 20 | 350 ± 25 | 430 | 370 ± 15 |
| Ak (10°C) | [kJ/m²] | 57.0 | - | 38,2 | - |
| Fmax (10°C) | [N] | 480 | - | 470 | - |
| Ak (0°C) | [kJ/m²] | 18.6 | - | 13.8 | - |
| Fmax (0°C) | [N] | 535 | - | 450 | - |
| Ak -(20°C) | [kJ/m²] | 17.3 ± 3.5 | 5.4 ± 1.3 | 13. ± 0.8 | 2.9 ± 0.3 |
| Fmax (-20°C) | [N] | 540 ± 15 | 325 ± 35 | 470 ± 5 | 355 ± 30 |

**Zugdehnung an S2-Stäben**

| | | | | | |
|---|---|---|---|---|---|
| Zugfestigkeit | [MPa] | 58 ± 6 | 36 ± 8 | 61 ± 7 | 84 ± 2 |

Ak ist die Kerbschlagzähig, Fmax die maximale Kraft in der Bruchkurve.

Der Vergleich dieser Blends zeigt, dass die Verwendung von Kautschuken mit hohem Gehalt an Maleinsäureanhydridgruppen sowie mit möglichst niedriger Glastemperatur sich besonders günstig auf eine hohe Kerbschlagzähigkeit auswirkt.

### Versuch 5

KA 8962 und EVOH wurden in einem gleichlaufenden Zweischneckenextruder (L/D 32) gemischt, wobei ein Gewichtsverhältnis von 25/75 eingestellt wurde, die Drehzahl war 97 U/min.. Das Material wurde mit einem Durchsatz von 10 kg/h als Strang extrudiert, mittels Durchgang durch ein Wasserbad gekühlt und zu Granulat zerhackt. Die Massetemperatur bei der Extrusion betrug 256°C, die Gehäusetemperatur betrug 225 bis 238°C.

Das Granulat wurde dann mit einer Arburg Injection Molding Maschine zu Probekörpern verarbeitet.

Die Kerbschlagzähigkeit wurde nach Izod-gekerbt (ISO 180-1A) für jede gewählte Temperatur an 10 Probekörpern bestimmt.

In der folgenden Tabelle bedeuten die fett markierten Werte einen spröden Bruch, während die anderen Werte sich auf einen duktilen Bruch beziehen.

**Kerbschlagzähigkeit kJ/m2 bei verschiedenen Temperaturen, jeweils 10 Proben**

| **Temp. °C** | **1** | **2** | **3** | **4** | **5** | **6** | **7** | **8** | **9** | **10** | **Durchschnitt** |
|---|---|---|---|---|---|---|---|---|---|---|---|
| -40 | 22,7 | 26,1 | 24,4 | 25,4 | 23,0 | 24,1 | 22,3 | 25,1 | 20,3 | 22,3 | 23,6 |
| -30 | 25,8 | 26,5 | 25,8 | 26,1 | 34,7 | 31,3 | 27,8 | 30,9 | 28,9 | 33,7 | 28,2 |
| -20 | 81,8 | 80,8 | 82,2 | 85,6 | 86,3 | 88,9 | 80,8 | 75,3 | 80,4 | 81,1 | 81,8 |
| 0 | 92,5 | 94,9 | 94,9 | 94,5 | 97,6 | 95,6 | 98,0 | 100,7 | 95,9 | 95,9 | 96,0 |
| 23 | 97,3 | 96,9 | 98,0 | 98,3 | 96,6 | 98,7 | 94,2 | 100,7 | 93,8 | 95,6 | 97,0 |

Der Temperaturverlauf der Kerbschlagzähigkeiten zeigt, dass der Spröd-Zäh-Übergang dieses Blends zwischen -20 und -30°C liegt. Auch in dem Temperaturbereich (z.B. -40°C), bei dem ein spröder Bruch gefunden wird, ist die Kerbschlagzähigkeit deutlich oberhalb der Werte, die bei reinem EVOH gefunden werden. Damit können Anforderungen erfüllt werden, wie sie im Automobilbereich gefordert werden.

### Versuch 6 (Vergleichsbeispiel 2):

In gleicher Weise wie in Versuch 5 wurden Probenkörper mit Grilon BFZ 3 erstellt und geprüft. Dabei wurden folgende Ergebnisse erhalten:

| **Temperatur. °C** | **Kerbschlagzähigkeit (Durchschnittswert aus 10 Bestimmungen, ISO 180-1A),** | **Art des Bruches** |
|---|---|---|
| 23 | 53,6 kJ/m2 | Duktil |
| -20 | 35,5 kJ/m2 | Duktil |
| -30 | 16,1 kJ/m2 | Spröde |
| -40 | 14,6 kJ/m2 | Spröde |

Die Kerbschlagtests zeigen deutlich, dass die Zähigkeit der erfindungsgemäßen Blends gegenüber dem unmodifizierten Vergleich (reines EVOH, Vergleich 1) stark zugenommen hat.

Es wird auch deutlich, dass Mischungen mit einem Zweischneckenextruder bessere Werte ergeben als in dem Mini-Mischer.

Der Zweischneckenextruder repräsentiert das in der kommerziellen Technik typische Verfahren zur Herstellung von Polymerblends. Die Daten zeigen, dass zwischen RT und -20°C fast keine Veränderung der Kerbschlagzähigkeit auftritt. Der Spröd-Zähübergang tritt bei ungefähr -30°C auf. Im Vergleich zu dem elastomer-modifiziertem Polyamid (Grilon BFZ 3), welches den Stand der Technik für Schlagzähmodifizierung bei Polyamid gut darstellt, wird damit überraschenderweise bei dem Thermoplasten EVOH eine klare Verbesserung erhalten.

### Versuch 7

Durchstoßversuch mit dem Blend aus Versuch 5 (nach EN ISO 6603-2)

| Meßtemperatur | bei -20°C | bei RT | |
|---|---|---|---|
| Maximalkraft Fmax | 5029 | 4070 | N |
| Verformation bei Fmax | 11,5 | 13,8 | mm |
| Gesamtenergie | 36,8 | 41,1 | J |
| Gesamtverformung | 13,1 | 16,8 | mm |

Die Durchstoßfestigkeit bleibt demnach zwischen RT und -20°C im wesentlichen gleich, so dass eine gleichbleibende Festigkeit in diesem Temperaturbereich geschlossen werden kann, das heißt auch in der Kälte bleibt die Flexibilisierung erhalten.

### Versuch 8

Granulat aus Versuch 5 wurde bei 210°C im Cast-Verfahren zu einer Folien extrudiert. EVOH EVAL L101B wurde ebenfalls zu Folien extrudiert.

Die erhaltenen Folien wurde dazu verwendet, um die Permeation von Wasserstoff zu bestimmen:

| Bestimmung der Wasserstoffpermeation, Mocon Tester, 1000 mbar H2, trocken, 23°C, Detektion per Druckmeßkondensator | | | |
|---|---|---|---|
| Folie | Dicke | Gasdurchlässigkeit cm3/(m2 d bar) | Permeation, normiert cm3 100µ /(m2 d bar) |
| Eval L101B, Folie | 63 µ | 6,9 | 4,4 |
| | 71 µ | 5,4 | 3,8 |
| Blend aus Versuch 5, Folie | 119 µ | 8,6 | 10,2 |
| | 125 µ | 8,3 | 10,3 |

Zum Vergleich seien die Permeationswerte verschiedener EVOH Typen angeführt:
Soamol mit 29mol% Ethylen: 27 cm3 20µ / m2 d bar (5,4 cm3 100µ/m2 d bar)
Soamol mit 32mol% Ethylen: 32 cm3 20µ / m2 d bar (6,4 cm3 100µ/m2 d bar)
Soamol with 44mol% Ethylen: 195 cm3 20µ / m2 d bar (39 cm3 100µ/m2 d bar)
(aus: Soarnol Technical Note "Hydrogen Gas Barrier Property of Soarnol).

Wasserstoff migriert infolge der kleinen Molekülgröße besonders schnell und kann bei neuen Antriebssystemen wie z.B. bei Brennstoffzellen eine wichtige Rolle spielen.

Es kann gefolgert werden, dass die erfindungsgemäßen Blends eine ähnliche Gasbarriere bzw. Medienbarriere aufweisen, wie die reinen EVOH-Materialien. Die erfindungsgemäßen Blends gehören damit ebenfalls in die Gruppe der Hochbarrierewerkstoffe, weisen jedoch zusätzlich die gewünschten Vorteile einer excellenten Flexibilitaet auf

### Versuch 8 : Haftung der erfindungsgemäßen Blends auf Kautschuk-Vulkanisate

**Compounds 1 bis 5 wurden in der üblichen Weise in Innenmischern hergestellt.**

| Compound-Nr. | | 1 | 2 |
|---|---|---|---|
| Therban® KA 8882, hydrierter Nitrilkaut- schuk für Tieftemperaturanwendungen | Lanxess AG | 75 | |
| Therban® KA 8889, hydrierter Nitril- kautschuk mit Carboxylgruppen | Lanxess AG | 25 | |
| Corax N 550, Ruß | Degussa AG | 40 | |
| Vulkasil A1, gefälltes Natrium-Alumi- nium-Silikat mittlerer Verstärkung, BET-Oberfläche (m2/g) 45 - 75 | Lanxess AG | 15 | |
| Sartomer® SR 633, Zink-diacrylat | Goebel & Pfrengle | 35 | |
| Vulkanox® ZMB2/C5, Zinc methyl mercaptobenz-imidazol | Lanxess AG | 0,5 | |
| TAIC® , Triallylisocyanurat, Coagenz | Kettlitz Chemie GmbH& Co.KG | 1 | |
| PERKADOX® 14-40 B-GR, 1,3-Bis(tert.-butylperoxiisopropyl)benzol | Akzo Nobel Chemicals GmbH | 7 | |
| Naugard® 445, Aryl- Diphenylamin- Antioxidant | Crompton | 1,2 | |
| Struktol® ZP - 1014, Zinkperoxid | Schill + Seilacher | 4 | |
| Levapren® 700 HV, Ethylen-Vinylacetat- Copolymer mit einem VA-Gehalt vom 70 Gew% und einem Mooneywert von ML 1+4, 100°C 27 | Lanxess AG | | 100 |
| Armeen® 18 D Prills, Oleyl-propylen-diamin | Akzo Nobel Chemicals GmbH | | 2 |
| Silquest® RC-1 Silan | GE Silicones | | 4 |
| TRONOX® R-U-5, Titandioxid | Kerr-McGee Pigments GmbH & Co. KG | | 5 |
| Vulkasil® S, gefällte Kieselsäure mit einer BET-Oberfläche von (m2/g) 155 - 195 | Bayer AG Dormagen | | 40 |
| OMYA® BSH, Calciumcarbonat | Omya GmbH | | 40 |
| Martinal® H10A, Aluminiumhydroxid | Martinswerke | | 130 |

| Compound-Nr. | | | 2 |
|---|---|---|---|
| Rhenofit® TAC/S, Triallyl-cyanurat | Rhein Chemie | | 0,5 |
| PERKADOX® 14-40 B-GR | Akzo Nobel Chemicals GmbH | | 6 |

| Compound-Nr. | | 3 | 4 |
|---|---|---|---|
| Buna® EPG 2440, EPDM, Mooney-Viskosität (ML (1+4) 125°C) 24 ENB-Gehalt (%) 4, Ethylengehalt (%) 51) | Lanxess AG | 100 | |
| Regal® SRF N 772, Ruß | Cabot GmbH | 50 | 50 |
| Zinkoxyd aktiv | Lanxess AG | 5 | 5 |
| Vulkanox® HS/LG, 2,2,4-trimethyl-1,2- dihydroquinolin, polymerized, TMQ | Lanxess AG | 0,5 | 0,5 |
| Rhenofit® TRIM/S, Trimethylolpropan- trimethacrylat. Gebunden mit aktiver Kieselsäure | Rhein Chemie | 2 | 2 |
| PERKADOX® BC-40 B-PD | Akzo Nobel Chemicals GmbH | 7 | 7 |
| Buna® EP G 3850, EPDM, Mooney-Viskosität (ML (1+4) 125°C) 28 ENB-Gehalt (%) 8, Ethylengehalt (%) 48 | Lanxess AG | | 100 |

| Compound-Nr. | | 5 |
|---|---|---|
| Buna® EP G 3850 | Lanxess AG | 75 |
| KA 8962 | Lanxess AG | 25 |
| Regal® SRF N 772, Ruß | Cabot GmbH | 50 |
| Zinkoxyd aktiv | Lanxess AG | 5 |
| Vulkanox® HS/LG | Lanxess AG | 0,5 |
| Rhenofit® TRIM/S | Rhein Chemie | 2 |
| PERKADOX® BC-40 B-PD | Akzo Nobel Chemicals GmbH | 7 |

Proben für die Haftungsprüfung wurden hergestellt, indem Platten aus Kautschuk-Compounds mit der angegebenen Zusammensetzung mit zwischenliegender Folie aus dem Blend aus Versuche 5 in der Presse vulkanisiert wurden.

Die Dicke der Folie war 100 µ. Die Vulkanisationsbedingungen waren 10 Minuten bei 180°C.

Die Haftung wurde bestimmt, indem Streifen mit 2 cm Breite ausgestanzt wurden und die beiden Streifen mit einem Winkel von 180° mit einer Zugdehnungsmaschine auseinandergezogen wurden.

Für einen Vergleich wurden diese Versuche wiederholt mit einer Folie auf Basis von reinem EVOH, Eval L101 B, mit einer Dicke von 100µ.

| Compound- Nr. | Elastomer, Vulkanisationssystem | Peelkraft in N | Peelkraft in N |
|---|---|---|---|
| | | Folie aus Vers. 5 | EVOH |
| 1 | HNBR-carboxyliert, Peroxid, Zn- diacrylat | 30 | 35 |
| 2 | EVM, Peroxid | 20-25 | 23 |
| 3 | EPDM, Peroxid | 5 | 2,5 |
| 4 | EPDM, Peroxid | 4,5 | 2 |
| 5 | EPDM, maleinisiert, Peroxid | > 25 | Nicht bestimmt |

Die Ergebnisse zeigen, dass die erfmdungsgemäßen Blends eine hohe Haftung an Kautschukcompounds zeigen, wenn Folien der Blends zusammen mit Kautschukcompounds in der Presse vulkanisiert werden. Diese Versuche zeigen, dass es möglich ist, Composits aus Kautschukvulkanisaten und Thermoplasten herzustellen. Die Verwendung von extrudierten Folien in den geschilderten Versuchen stellt selbstverstaendlich eine Vereinfachung fuer die leichtere Versuchsdurchfuehrung dar. Tatsaechlich sind alle Verarbeitungsverfahren moeglich, bei denen der Barrierwerkstoff unter Bedingungen der Schmelzeverarbeitung mit einem vulkanisationsfaehigem Kautschuk-Compound in Kontakt gebracht wird. Dies ist gegeben, wenn beide Materialien in Extrusionsverfahren miteinander in Kontakt gebracht werden. Wird ein Formteil des Barrierwerkstoffes nach Formgebung mit dem Kautschuk-Compound zusammengebracht wie in den erfindungsgemaessen Beispielen, so sorgt die notwendige Vulkanisationstemperatur zusammen mit der Vulkanisationszeit fuer die noetigen Haftungsbedingungen.

Eine technische Ausgestaltung des Verfahrens kann z.B. durch Coextrusion von Barrierwerkstoff, gegebenenfalls anderen Thermoplastwerkstoffen und einem Kautschuk-Compound und anschließender Vulkanisation erfolgen wie es bei Schläuchen und Leitungen üblich ist. Der erfindungsgemäße Blend kann z.B. die Innenseele eines flexiblen Medienschlauches darstellen.

Die Haftung ist hoch, wenn polare Kautschuke eingesetzt werden. Ebenso ist es auch möglich, den Kautschukcompounds Elastomere mit Maleinsäureanhydrid-Funktionen oder Carbonsäuregruppen hinzuzufügen, um so hohe Haftungen zu den erfindungsgemäßen Blends zu erzielen. Dies ist insbesondere erforderlich, wenn die Elastomeren nicht polar sind wie beispielweise EPDM. Polare Kautschuke sind beispielsweise Ethylen-Vinylacetat-Copolymere mit hohen Vinylacetatgehalten von 40Gew% und mehr, oder auch Ethylen-Acrylat-Copolymere mit hohen Acrylatgehalten von 50Gew% und mehr, oder auch Polyacrylate.

Unpolare Elastomere wie EPM oder EPDM muessen durch polare Gruppen modifiziert werden, wobei es bereits ausreicht, wenn nur eine Teilmenge des Elastomers in dem Kautschuk-Compound modifiziert ist. Die reaktiven Gruppen sollten Gehalte von mindestens 0,02-mol% aufweisen, bevorzugt mindesten 0.05 mol%. Als reaktive Gruppen kommen ebensowie wie zur Herstellung der erfindungsgemaessen Thermoplastblends solche Gruppen infrage, die mit den Alkoholgruppen der Komponente a) in Reaktion treten koennen. Geeignet sind daher beispielsweise Carboxylgruppen, Saeureanhydridgruppen, Sulfonylchloridgruppen, Carbonsaeurechloridgruppen, Isocyanatgruppen und Epoxydgruppen. Bevorzugt sind Saeureanhydridgruppen.

Unter fuer die Haftung geeigneten polaren oder reaktiven Kautschuk-Compounds werden auch thermoplastisch-verarbeitbare Vulkanisate (TPV) bzw Elastomere (TPE) verstanden, sofern diese ueber entsprechende reaktive Gruppen (mindestens 0,02 mol%) oder Anteile von mindestens 50 Gew% an polaren Kautschuken wie oben definiert verfuegen.

Blends entsprechend der Erfindung ermöglichen die Herstellung von Behältern mit Barriere-eigenschaften, so dass sowohl die Permeation von Sauerstoff in den Behälter wie auch die Permeation von flüchtigen Verbindungen aus dem Behälter minimiert werden kann. Diese Behälter können mit den erfindungsgemäßen Blends nun Schlagbeanspruchungen in der Kälte widerstehen, wie sie z.B. bei dem Handling in Kühllagern und besonders bei großvolumigen Gebinden vorkommen können.

## Patentansprüche

1. Mischungen bestehen aus
a) Ethylen/Vinylakohol-Copolymerisaten mit einem Gehalt an Ethylengruppen von 15 bis 60 Mol-%, einem Gehalt an Vinylalkoholgruppen von 40 bis 85 Mol-% und gegebenenfalls einem Gehalt an Vinylestergruppen von maximal 20 Mol-% sowie
b) vernetzbaren Kautschuken mit einem T_{G}-Wert von < - 20°C, wobei die Kautschuke mit reaktiven Gruppen modifiziert sind und der Gehalt an modifizierenden Gruppen 0,01 bis 5 Mol-% beträgt,
wobei die Menge an Komponente a) 30 bis 95 Gew.-%, bezogen auf die Menge der Gesamtmischung, ausmacht.

2. Mischungen nach Anspruch 1 wobei die Komponente b) mit einer Saeureanhydridfunktion modifiziert ist.

3. Mischungen Anspruch 1 wobei die Komponente b) mit einer Carbonsaeurefunktion modifiziert ist.

4. Verwendung der Mischungen nach Anspruch 1 bis 3 zur Herstellung von geformten Artikeln mit guten Barriere-Eigenschaften.

5. Verwendung der Mischungen nach Anspruch 1 bis 3 zur Herstellung von Formkörpern, insbesondere von mehrschichtigen Behältern, Rohren, Leitungen, Schläuchen, Verbindungsstücken, Platten und Folien.

6. Materialsverbunde mindestens bestehend aus Mischungen nach Anspruch 1 bis 5., die fest haftend verbunden sind mit vernetzten Compounds auf Basis polarer Kautschuke oder auf Basis reaktiver Kautschuke nach b).

7. Materialsverbunde mindestens bestehend aus Mischungen nach Anspruch 1 bis 5., die fest haftend verbunden sind mit vernetzten Compounds auf Basis polarer Kautschuke vom Typ Ethylen-Vinylacetat-Copolymerer mit Vinylacetatgehalten von 40 Gew% und mehr, oder vom Typ Ethylen-Acrylat-Copolymerer mit mindestens 50 Gew% Acrylatgehalt, oder vom Typ der Polyacrylate.
